Europäisches Patentamt

European Patent Office

Office européen des brevets

(11) Publication number: **0 094 254**
**B1**

## EUROPEAN PATENT SPECIFICATION

(45) Date of publication of patent specification: **09.09.87**

(51) Int. Cl.⁴: **H 04 L 25/49**

(21) Application number: **83302659.4**

(22) Date of filing: **11.05.83**

(54) Integrated scrambler-encoder using PN sequence generator.

(30) Priority: **11.05.82 US 377099**

(43) Date of publication of application:
**16.11.83 Bulletin 83/46**

(45) Publication of the grant of the patent:
**09.09.87 Bulletin 87/37**

(84) Designated Contracting States:
**BE CH DE FR IT LI NL SE**

(56) References cited:
**EP-A-0 035 674**
**GB-A-2 005 116**

**THE BELL SYSTEM TECHNICAL JOURNAL, vol.
46, February 1967, pages 449-487, New York,
USA, J.E. SAVAGE: "Some simple self-
synchronizing digital data scramblers"**

(73) Proprietor: **TANDEM COMPUTERS
INCORPORATED**
**19333 Vallco Parkway**
**Cupertino California 95014 (US)**

(72) Inventor: **Weldon, Edward J., Jr.**
**1152 Kealaolu Avenue**
**Honolulu Hawaii 96816 (US)**

(74) Representative: **Ranson, Arthur Terence et al
W.P. Thompson & Co. Coopers Building
Church Street
Liverpool L1 3AB (GB)**

## Description

The present invention relates to communications equipment in the form of an integrated scrambler-encoder using PN sequence generator, and more particularly to digital transmission equipment implementing block coding techniques. For simplicity, the term coding is used herein to refer to error detecting and correcting coding.

Information transmission systems typically involve a data source, a modulator for converting the data from the data source into a form suitable for transmission, and a transmitter for placing the information on a communications channel. Functionally similar receiving equipment then receives the transmission from the channel, decodes it, and provides useful information to the user.

With the advent of digital communications, the need for highly reliable data transmission and reception necessitated improvements in the relatively simple transmission system discussed above. One improvement was the development of coding techniques which assisted in assuring the integrity of the system, such as block coding. Associated with such coding techniques was the requirement for a block encoder circuit to be included with the transmission system, and a corresponding decoder to be associated with the receiver system.

Associated with digital systems of all types was the problem of naturally occurring constant character strings, that is, long strings of either all ones or all zeros, which tended to disrupt the integrity of the data because of synchronization problems. To help resolve this problem, scrambler circuits were introduced to predictably eliminate such problematic character strings. Basic to most scramblers is a pseudorandom (PN) sequence generator, the output of which is exclusive OR'ed with the data to be scrambled. However, the tradeoff in making such an improvement is that the transmission system became additionally complex, causing increased opportunity for failure. Likewise the addition of an extra component into the transmission system increased power consumption, and other associated ills. See for example Patent Application GB—A—2,005,116.

Thus, while the advantages of data integrity provided by scrambling and coding techniques are desirable, obtaining these advantages has thus far required acceptance of significantly increased complexity of the transmission system, together with greater power consumption, larger size, inceased part count, and greater heat dissipation.

The present invention provides the advantages of employing coding and scrambling techniques in a transmission system, while at the same time substantially reducing the negative factors associated with conventional implementations of such techniques.

These goals are accomplished in the present invention by integrating together the encoding and scrambling techniques. Similarly, the benefits of the present invention may be successfully inplemented during decoding and descrambling in a manner which will be apparent to those skilled in the art from the discussion herein. The first step in accomplishing this is to set the block length of the encoder equal to an integer multiple of the period of the scrambler. Then, by constructing the block counter from a pseudorandom sequence generator, the counter can be made to provide both a count function as well as a PN sequence function. The output of the PN sequence generator may then be combined with the data stream to yield scrambled data, without the need for a separate PN sequence generator. As a result, both objectives are accomplished with a minimum of system resources.

According to the present invention a scrambler-encoder for a digital transmission system comprising input means for receiving input data, block counter means for counting block lengths, and scrambling means for providing scrambled block data, is characterised in that the block counter means comprises a plurality of block counter stages, feedback means responsive to at least one said block counter stage for causing said block counter to generate pseudorandom number sequences with a period equal to an integer multiple of the block length, and in that the scrambling means is responsive to said input data and to said pseudorandom number sequences for generating scrambled data blocks.

The present invention will now be further described by way of example with reference to the accompanying drawings in which:

Figure 1 illustrates a digital communications system into which the present invention has been incorporated,

Figure 2 illustrates in schematic block diagram form the scrambler-encoder of the present invention, and

Figure 3 illustrates in detailed schematic form the counter/PN sequence generator of Figure 2.

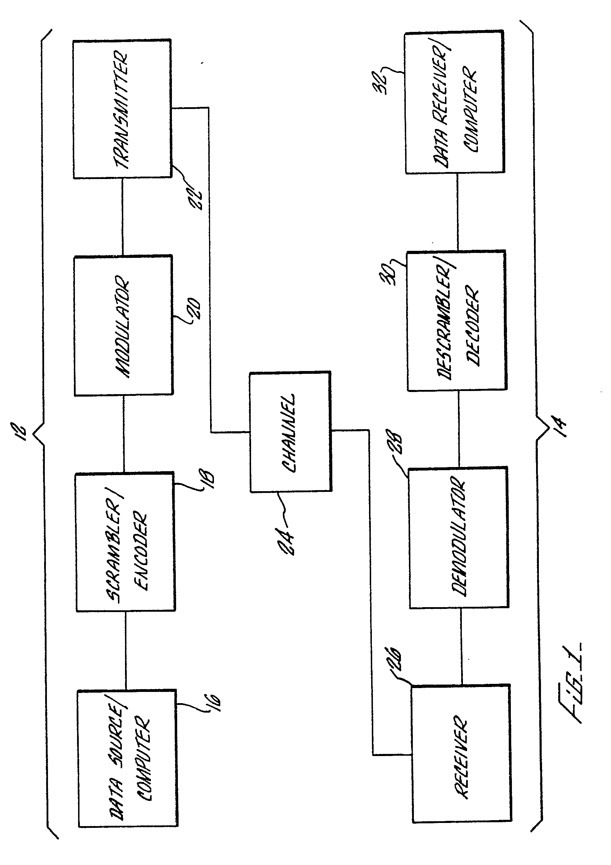

Referring first to Figure 1, a digital communications system 10, including a transmitting section 12 and a receiving section 14, is illustrated. The transmitting section 12 includes a data source 16, such as a computer, which provides digital signals to a scrambler-encoder 18 of the present invention, which places the signals in block mode. The scrambled and encoded signals are then passed through a modulator 20 to condition them for transmission by a transmitter 22 onto any suitable channel 24. The transmitter 22 may, for example, include an earth station, and the channel 24 may employ microwave frequencies.

Similarly, the receiving section 14 includes a receiver 26 which picks up the modulated signals from the channel 24 and transmits them to a demodulator 28. The demodulated signals are then fed to a descrambler-decoder 30 which corresponds to scrambler-encoder 18 and causes the digital signals to be returned to their original values. The signals are then fed to data receiver 32, such as another computer, and are operated on in the normal manner. A communications system in which the present invention is suitable for use is disclosed in co-pending European Patent Application No. 83 302,658.6 entitled "Satelite Communications System for Computer Networks", filed concurrently herewith.

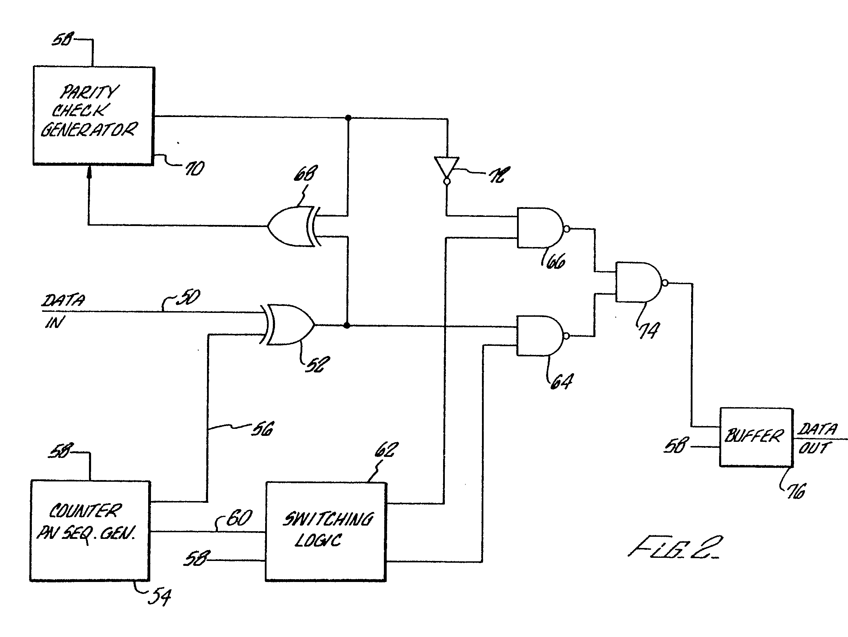

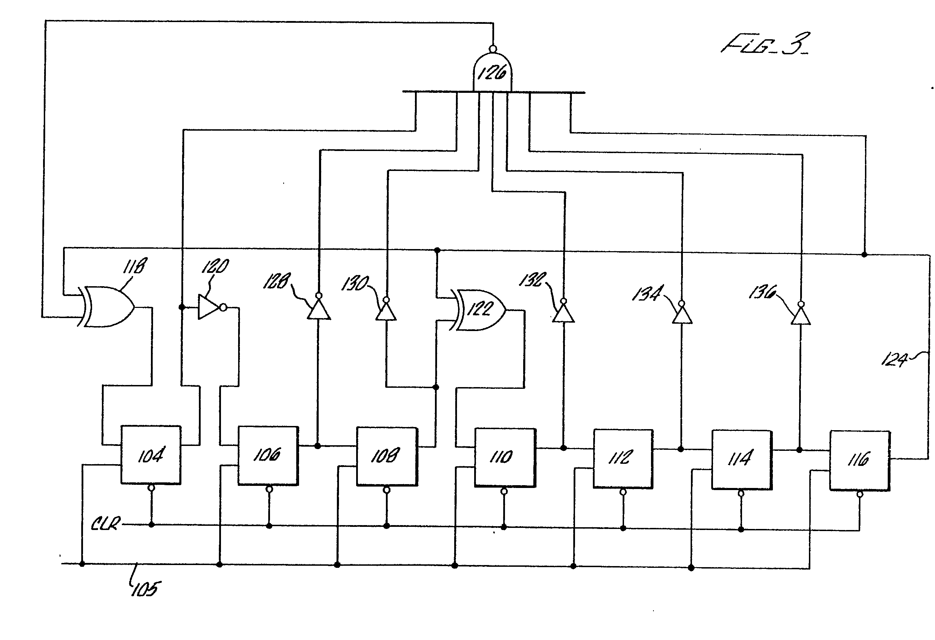

Referring next to Figure 2, the scrambler-encoder of the present invention (reference 18 in Figure 1) is shown in block diagram form. Incoming data is received on line 50 and provides one input to a two input exclusive OR gate 52, forming a scrambler. The remaining input to the gate 52 is received on line 56 from a counter/PN sequence generator 54, described in greater detail in Figure 3. In an exemplary embodiment, the counter/PN sequence generator 54 is a seven stage counter which also generates a pseudorandom number sequence of period 127, with the output of the seventh stage provided on the line 56. The counter 54 is driven by a master clock input received on a line 58. It will be appreciated that the exclusive OR gate 52 operates to combine the pseudorandom number sequence generated by the counter 54 with the incoming data received on the line 50, causing the output of the gate 52 to be scrambled data.

In addition, a plurality of the lines on the stages of the counter 54 are provided on output lines 60 to switching logic 62. The switching logic 62 also receives a clock input on the line 58. The switching logic 62, which may include two seven input gates and a J-K flip-flop, with the AND gates providing the J and K inputs to the flip-flop, provides true and complement outputs to a pair of two input NAND gates 64 and 66. The purpose of these signals is to gate received data and the contents of a parity check generator 70 to the output buffer as appropriate. The second input to the gate 64 is provided by the output of the scrambler gate 52, which also provides one input to another exclusive OR gate 68. The exclusive OR gate 68 completes a feedback loop around the parity check generator 70, such that the remaining input to the gate 68 is received from the output of the generator 70, and the output of the gate 68 provides one input to the generator 70. The generator also receives a clock input on the line 58.

The output of the parity check generator 70, which calculates the check bits needed for error detection and/or correction, is also provided to the gate 66 through an inverter 72. The output of the gates 64 and 66 are then combined in a NAND gate 74, from which the output is provided to a data out buffer 76. The data out buffer may simply be a D flip flop which also receives a clock input from the line 58.

The operation of the circuit of Figure 2 will now be explained. During a portion of the block cycle, the counter 54 counts up as well as generating a pseudorandom sequence which is combined with the incoming data at the scrambling gate. At the same time, the syndrome generator generates parity bits, while the switching circuit monitors the state of the counter 54 and, for the time being, allows data to be output. When the counter reaches a predetermined point (112 for the circuit shown), the switching circuit inhibits the passage of data and causes the parity bits from the syndrome generator to be output. At the end of the block length (127 for example shown), the ability of the circuit to pass data is restored, and the cycle repeats.

Referring now to Figure 3, the counter/pseudorandom sequence generator 54 (Fig. 2) is illustrated in detailed schematic form. A flip flop 104 receives a clock signal on a line 105, which clock signal is also provided to a plurality of additional flip flops 106, 108, 110, 112, 114 and 116. The D input to the flip flop 104 is received from a two input exclusive OR gate 118, which basically provides a feedback loop from the outputs of the counter as will be discussed hereinafter.

The Q output of the flip flop 104 is then provided to the second D flip flop 106 through an inverter 120. The true output of the flip flop 106 is then fed directly to the input of the flip flop 108. The true output of the flip flop 108 is then fed to one input of an exclusive OR gate 122, the remaining input to which is provided by the true output of the flip flop 116. The output of the exclusive OR gate 122 is then fed to the input of the flip flop 110. The flip flop 110 output feeds the input of the flip flop 112, which in turn feeds the remaining flip flops 114 and 116 in a like manner.

It will also be seen that the output of the flip flop 116, in addition to providing a scrambler output on the line 124 and a feedback input to the gate 122 also provides another feedback input to the gate 118. The remaining input to the gate 118 is provided from a seven input NAND gate 126, which receives as its inputs the complement outputs of the stages of the counter 54. The complement output of the flip flop 106 is formed by passing its output through an inverter 128; the remaining complement outputs are similarly formed from the outputs of flip flops 108, 110, 112 and 114, through the use of inverters 130, 132, 134 and 136.

It can be seen that the flip flops 104 et seq. provide a counting function as required by a block length encoder; for the particular embodiment shown, the count length may be seen to be 127. Also, with the addition of feedback through the exclusive OR gates 118 and 122, a pseudorandom sequence is also generated. As a result, the combination of the D flip flops and the exclusive OR gates provides a pseudorandom number sequence generator with a period of 127, while at the same time counting to 127 for a block code length of 127. Although in the present example the block length is equal to the length of the scrambling period, the length of the scrambling period could alternatively be set to any integer multiple of the block length.

While the foregoing example of the present invention has involved the scrambling and encoding functions, the benefits of the present invention are equally applicable to the decoding and descrambling functions. It is believed that implementation of the present invention in such a device will be apparent to those skilled in the art, given the foregoing discussion, and as a result such a decoder will not be described in detail.

It can be seen that an integrated scrambler-encoder or descrambler-decoder has been disclosed, with the benefits of decreased complexity, increased reliability and lower power dissipation. It will be appreciated that, while the embodiment of the present invention discussed in detail above includes seven stages, many different count lengths can be provided without varying from the intent of the present invention. Thus, other embodiments of PN Sequence Generators can be developed which use of irreducible polynominals as presented in Appendix C of *Error Correction Codes, Edition 2,* W. W. Peterson & E. J. Weldon, Jr., MIT Press 1972. It will therefore be appreciated that, while one embodiment has been discussed in detail, other alternatives and equivalents will be apparent to those skilled in the art given at the teachings herein, and the appended claims are intended to encompass those equivalents and alternatives.

## Claims

1. A scrambler-encoder for a digital transmission system comprising input means for receiving input data, block counter means for counting block lengths, and scrambling means for providing scrambled block data, characterised in that the block counter means (54) comprises a plurality of block counter stages (104 to 116), feedback means (118, 122) responsive to at least one said block counter stage (116) for causing said block counter (54) to generate pseudorandom number sequences with a period equal to an integer multiple of the block length, and in that the scrambling means (52) is responsive to said input data and to said pseudorandom number sequences for generating scrambled data blocks.

2. A scrambler-encoder as claimed in claim 1, characterised by clock means for generating clock signals (58), the block counter means (54) being responsive to the clock means for providing count signals and the pseudorandom number sequences, the scrambling means (52) comprising logis combining means responsive to the incoming data on the input means (5) and the pseudorandom number sequences (56) from the block counter (54) for providing scrambled data, parity check generator means (70) responsive to the scrambled data and the clock means for generating parity bits, and switching logic means (62) responsive to the signals from stages of the block counter means (54) and to the clock means for determining during which periods an output means (76) will receive scrambled data from the scrambling means (52) and during which periods the output means will receive parity bits from the parity check generator means (70).

## Patentansprüche

1. Verschlüsselungs- und Kodiervorrichtung für eine digitale Übertragungsanordnung, mit einer Eingabeeinrichtung zum Empfang von Eingangsdaten, einer Blockzähleinrichtung zum Zählen von Blocklängen und einer Verschlüsselungseinrichtung zur Bereitstellung verschlüsselter Blockdaten, dadurch gekennzeichnet, daß die Blockzähleinrichtung (54) mehrere Blockzählstufen (104 bis 116), Rückkoppelungseinrichtungen (118, 122), die auf wenigstens eine Blockzählstufe (116) ansprechen derart, daß der Blockzähler (54) pseudozufällige Zahlenfolgen mit einer Periode erzeugt, die gleich ist einem ganzzahligen Vielfachen der Blocklänge, und daß die Verschlüsselungseinrichtung (52) auf die Eingangsdaten und die pseudozufälligen Zahlenfolgen zu der Erzeugung der verschlüsselten Datenblöcke anspricht.

2. Verschlüsselungs- und Kodiervorrichtung nach Anspruch 1, gekennzeichnet durch eine Takteinrichtung zur Erzeugung von Taktsignalen (58), wobei dir Blockzähleinrichtung (54) auf die Takteinrichtung anspricht und Zählsignale und die pseudozufälligen Zahlenfolgen bereitstellt, wobei die Verschlüsselungseinrichtung (52) eine logische Kombiniereinrichtung enthält, die auf die einlaufenden Daten an der Eingangseinrichtung (50) und die pseudozufälligen Zahlenfolgen (56) vom Blockzähler (54) zur Erzeugung verschlüsselter Daten anspricht, durch eine Paritäts-Prüfgenerators-Einrichtung (70), die auf die verschlüsselten Daten und die Takteinrichtung zur Erzeugung von Paritätsbits anspricht, und durch eine Schaltlogikeinrichtung (62), die auf die Signale von den Stufen der Blockzähleinrichtung (54) und die Takteinrichtung anspricht und festlegt, während welcher Perioden eine Ausgangseinrichtung (76) verschlüsselte Daten von der Verschlüsselungseinrichtung (52) und während welcher Perioden die Ausgangseinrichtung Paritätsbits von der Paritäts-Prüfgenerator-Einrichtung (70) erhält.

## Revendications

1. Codeur à transcodage pour un système de transmission numérique comportant des moyens d'entrée pour recevoir des données d'entrée, des moyen de comptage de blocs pour compter des longueurs de blocs et des moyens de transcodage pour fournir des données de blocs codées, caractérisé en ce que les moyens de comptage de blocs (54) comportent une pluralité d'étages de comptage de blocs (104 à 116), des moyens de réaction (118, 122) sensibles à au moins l'un (116) des étages de comptage de blocs pour commander la production par ledit compteur de blocs (54) de séquences de nombres pseudoaléatoires avec une fréquence égale à un multiple entier de la longueur de bloc, et en ce que les moyens de transcodage (52) sont sensibles auxdites données d'entrée et auxdites séquences de nombres pseudoaléatoires pour produire des blocs de données codées.

2. Codeur à transcodage selon la revendication 1, caractérisé par des moyens d'horloge pour produire des signaux d'horloge, les moyens de comptage de blocs (54) étant sensibles aux moyens d'horloge pour fournir des signaux de comptage et les séquences de nombres pseudoaléatoires, les moyens de transcodage (52) comportant des moyens de combinaison logiques sensibles aux données des moyens d'entrée (50) et aux séquences de nombres pseudoaléatoires (56) du compteur de blocs (54) pour fournir des données codées, de moyens générateurs (70) de vérification de parité sensibles aux données codées et aux moyens d'horloge pour produire des bits de parité, et des moyens logiques de commutation (62) sensibles aux signaux provenant des étages des moyens de comptage de blocs (54) et aux moyens d'horloge pour déterminer les périodes pendant lesquelles des moyens de sortie (76) vont recevoir des données codées provenant des moyen de transcodage (52) et les périodes pendant lesquelles les moyens de sortie vont recevoir des bits de parité provenant des moyens générateurs (70) de vérification de parité.

Fig. 1

0 094 254

FiG.2.

0 094 254

FIG_3.

0 094 254